# EUROPEAN PATENT SPECIFICATION

(11) **EP 3 361 095 B1**
(45) Date of publication and mention of the grant of the patent: **06.01.2021**
(21) Application number: 17382069.7
(22) Date of filing: 10.02.2017
(51) Int. Cl.: F03D 80/50

(54) **MACHINE TOOL FOR USE INSIDE WIND TURBINE NACELLES AND ITS INSTALLATION PROCEDURE AND ALIGNMENT TOOL**
WERKZEUGMASCHINE ZUR VERWENDUNG IN WINDTURBINENGONDELN UND DEREN INSTALLATIONSVERFAHREN UND AUSRICHTUNGSWERKZEUG
MACHINE-OUTIL DESTINÉE À ÊTRE UTILISÉE DANS DES NACELLES DE TURBINE ÉOLIENNE ET SON PROCÉDÉ D'INSTALLATION ET OUTIL D'ALIGNEMENT

(43) Date of publication of application: 15.08.2018
(73) Proprietor: Izanda Portable Machine Tools, S.L., 12006 Castellon de la Plana (ES)
(72) Inventor: GARCIA SANCHEZ, Juan Francisco, 12006 CASTELLÓN DE LA PLANA (ES)
(74) Representative: Alier Benages, Elisabet

(56) References cited:
- WO-A2-2013/075717
- CN-A- 101 518 864
- US-A1- 2009 220 343
- US-A1- 2015 135 534

## Description

### FIELD OF TECHNOLOGY

The present invention relates to a portable machine tool for use inside wind turbine nacelles, preferably a milling machine, which operates on the slewing ring of the wind turbine. It relates also to its installation procedure.

### STATE OF THE ART

Wind turbines, as their name indicate, transform the wind power into electricity. This is why these pieces of equipment are located in places where the existence of strong winds is known, which allow to make profitable the generation capacity. Among the parts of the wind turbines we should note as the main ones the tower, the nacelle and the blades.

Due to the fact that winds usually roll, the blades carried by the nacelle must be able to be oriented towards the wind in order to optimize wind resources. There are different systems of orientation of the wind turbines, but the most commonly used is the one that is known as Pinion-Sprocket system. The slewing ring is joined to the tower, while the pinions are driven by gear motors (yaw motor) located in the nacelle. With the operation of these motors, they allow the rotation of the pinions that, in turn, rotate the whole nacelle on the tower.

If there is a fault in the slewing ring, such as the breakage of teeth, it is a serious drawback for the proper operation of the yaw system and by extension, of the wind turbine itself. When these types of faults occur, there are basically two options: completely replacing the slewing ring or repairing the damage.

There are several factors responsible for the breakage of the teeth of the slewing ring: aging equipment, faulty maintenance, extreme wind conditions, etc. At present, there are two possibilities for repairing the breakage of teeth:
- Reloading by means of related welding with manual grinding in order to maintain the tooth geometry.
- Reparation by means of the slewing ring machining and assembling of an insert/tooth that will replace the damaged teeth.

For this reason, the possibilities of carrying out a solution or other (or none) will depend on the type of windmill (manufacturer, model, version of the wind turbine) referred to and the technology developed for said mill.

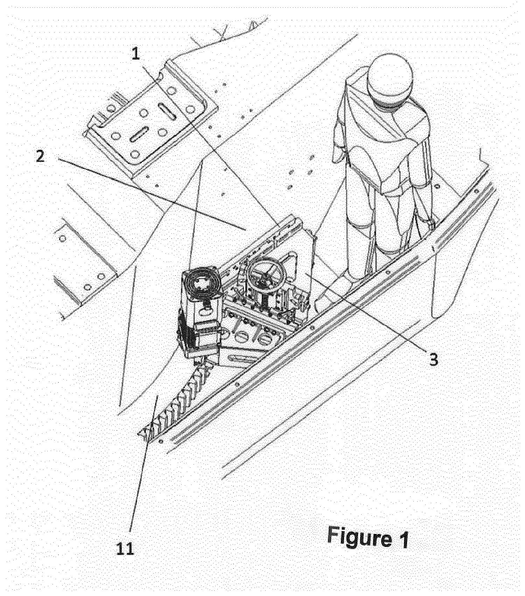

The second reparation option consists in machining a pocket in the damaged zone of the slewing ring inside the windmill itself. To this effect there is the need of a portable machine tool adapted to the specific conditions of the tower, such as the spatial conditions shown in figure 1, able to carry out the machining. Once the pocket is finished, an insert of equal geometric characteristics and equal or better mechanical characteristics than the slewing ring is mounted.

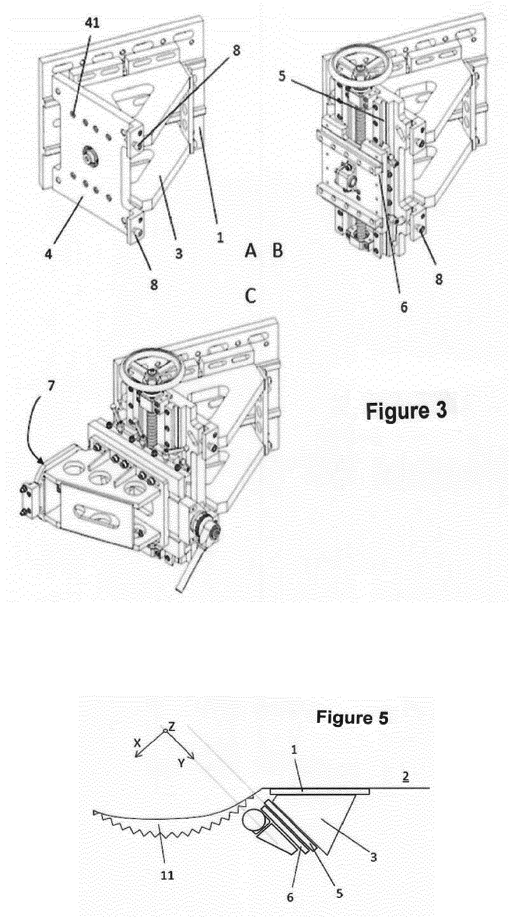

In the case of some similar models from Gatable or Vestas, a portable milling machine already exists for recovering G47/V47 slewing rings, which would be the closest prior art. Nevertheless, this milling machine is designed for these specific models of wind turbine and cannot be used in other models, not even from the same manufacturers. It has a milling table that is mounted horizontally on the nacelle frame, where the access ladder to the turbine is located, that is already parallel to the slewing ring. Positioning the coordinate axis in the centre of the machine, the milling machine has dovetails for the Y (radial to the slewing ring) and Z (height) (see figure 5) movements. The X movement (tangential to the slewing ring) is achieved by operating the gear motors that make the slewing ring rotate. That is, the rotation of the slewing ring is combined with the other two axes typical to the milling machine.

US2009220343 might be considered the closest prior art, in that it comprises a gear repair method inside a wind turbine. The gears are refurbished with an insert similar to the one used in the present invention.

US2015135534 discloses a machining device configured to be fixed to the inside of the wind turbine, but which only allows for little adjustment and is difficult to align properly. The applicant does not know of any portable machine tool equipment allowing to repair any slewing ring damaged due to the loss of a tooth, or to carry out other maintenance operations inside the nacelle, similar to the invention.

### BRIEF EXPLANATION OF THE INVENTION

The invention consists of a portable machine tool for use inside wind turbine nacelles, and its installation procedure, according to the claims.

The fastening element and configuration of the machine enables it to be vertically placed in a frame and above the slewing ring, although the angle between the frame and the slewing ring might not be known. It enables therefore to adjust the angles and orientations to carry out the machine tool operation, generally a milling machine, in the best possible position. It is based on the slewing ring protruding out of the frame, so that it can be accessed from an outer support on the frame.

To overcome the irregularities of the surface and the planes not being coincident, a rotation system and adjustable jacks have been designed to overcome these drawbacks. This particular design of the fastening element incorporated in the machine tool also implies that a different working procedure is needed in order to ensure the perfect levelling and aligning of the machine tool (for example a milling machine).

The machine tool for use inside wind turbine nacelles, which constitutes the first aspect of the invention, has a fastening element that comprises a mount, that can be sacrificed although generally it is interesting to recover it, linkable to a vertical or approximately vertical element of the nacelle frame. Above this mount, a frame is fixed that generally will be a triangular prism with a determinate angle that will define a spot of the frame where the mount will be situated. An example of an angle will be 50°.

The angle of the prism will depend on the size/width differences between the frame and the slewing ring and the positioning of the portable machine on the first one. As a general rule (in order to facilitate the machining of the slewing ring) the machine will be fixed as close as possible to the element to be machined, that is, the damaged slewing ring, but taking into account the spatial limitation and the different configurations that the frame (irregular surfaces, for example) might have. Therefore, the dimensions of the prism will depend on the model and version of the wind turbine.

In any case, both slides (vertical and horizontal) will have to be placed approximately parallel to the work planes of the machine tool (vertical slide - perpendicular to the horizontal surface of the slewing ring, horizontal slide - parallel to the horizontal plane of the slewing ring and the whole set lined with the centre of the slewing ring), so that later adjustments will be minimal. All this will be explained later with the help of figure 5.

The distance between the work plane and the slides is a set measure for each machine tool. The slides will produce the movement of the machine tool inside the work plane.

In order to correctly adjust the position, the joint of the mount to the frame may comprise a guide or slotted holes providing play in the relative positions of both elements.

Said pair of slides is placed in the free rim of the frame, with a joint that enables a double rotation adjustment:
In the first place, with respect to the perpendicular axis to the free rim of the frame, thus making sure that the movement of the horizontal slide is perfectly horizontal (parallel to the slewing ring). It may be by means of a ball joint, or more preferably by means of jacks in the ends of the free rim.

Secondly, with respect to a horizontal axis parallel to the free rim. In this case it can be by means of the collaboration of pushing set screws and fastening screws. The fact of tightening the set screws separates the corresponding end of the slide, while the fastening screws limit the separation. In this way it is ensured that the movement of the vertical slide is perfectly perpendicular to the slewing ring (Z axis).

A similar double adjusting system can be arranged in the mount and frame joints, to finish aligning the work plane.

The opposite side of the two slides carries the machine tool, with a rotation axis system that checks the perfectly vertical positioning of the head of the machine tool so that its movement is maintained in the Y-Z plane correcting any deviation of the mounting.

In the preferred embodiments, the machine tool is a milling machine, in which the (motorized) milling head will be fixed, through a ram, above the rotation axis. For greater versatility, the milling machine may comprise:
- A potentiometer of the milling machine head for controlling the rotary plate speed.
- A control panel for the machine tool that will have means to control the nacelle orientation movement (that is, a connexion with the wind turbine controller and the corresponding controls).

The invention also refers to the installation procedure of the machine tool, which comprises the following stages:
[a]. Hoisting the components of the machine tool to the interior of the nacelle. This hoisting will almost always be done in parts given the lifting weight and the space inside the nacelle.
[b]. Installing the mount in an element of the nacelle frame near the operation spot of the machine tool in the slewing ring. To ensure the perfect centring of the machine, the mount linkable to the frame will be set in position with respect to the slewing ring in accordance with the size of the fastening element, although any difference between the real and the ideal position may subsequently be adjusted.
[c]. Installing the remaining components of the machine tool, the frame for fastening it to the mount, horizontal and vertical slides arranged in the free rim of the frame, and machine tool. When the machine will be a milling machine, the machine tool will comprise a ram, a rod and a driving motor of the head milling.
[d]. Correcting the position of the horizontal slide so that it will be parallel to the upper plane of the slewing ring, by means of the rotation with respect to the perpendicular axis on the free rim of the frame, thus ensuring that the movement of the horizontal slide will be perfectly horizontal.
[e]. Correcting the position of the vertical slide so that its movement will be perpendicular to the plane of the slewing ring, by means of the rotation with respect to a horizontal axis parallel to the free rim of the frame.
[f]. Vertically dispose the head of the machine tool by means of a rotation axis system arranged between the slides and the machine tool.

As stated, the preferred embodiment is for installing a milling machine, or another machine tool that may actuate on the slewing ring

The stages [d] to [f] can be performed by means of a gadget that shows the radial lineal projection on the slewing ring.

This gadget is part of the invention and it comprises a rim identical to the teeth of the slewing ring, including its curving, and two side edges arranged perpendicular to the corresponding end of said rim, so that they coincide with the slewing ring radius. It corresponds to the insert used in case of needing to replace the teeth of the slewing ring, as it will be explained in the embodiment example.

### DESCRIPTION OF THE FIGURES

For a better understanding of the invention, the following figures are included.
Figure 1: Explanatory general view of the place of operation with the machine tool according to an embodiment example.
Figure 2: General view of a machine tool with its fastening element, in an embodiment example corresponding to a milling machine.
Figure 3 (A-C): Successive views of the mounting of the different elements of the fastening element.
Figure 4: Examples of pockets made in a slewing ring and of an insert for the reparation of the slewing ring's teeth by means of milling machine.
Figure 5: Schematic upper view of the machine tool in position, including the coordinate system used to describe the invention.

### MODES OF EMBODIMENT OF THE INVENTION

The following is a brief description of a mode of embodiment of the invention, as an illustrative and non-limiting example, applied to an example of a machine tool such as a milling machine. The portable machine represented in these figures is designed with reference to the model AW1500, from the company Acciona Wind Energy, but the invention is of generalized application in other wind turbines that have similar configuration characteristics.

The fastening element for machine tools, for example milling machines, inside wind turbine nacelles comprises a mount (1) fixable to the wind turbine nacelle frame element (2). This frame element (2) may be irregular, vertical or inclined, ... giving the greatest versatility to the fastening element. The mount (1) is fixed by means of any suitable method: screws, welding, ... that may be left in place once the maintenance is over, or disassembled for its transfer to the next spot to be repaired. The spot of the mount (1) installation must be calculated according to the orientation of the machine tool, so that the machine tool will be already in the position close to the final position, given that the play of the different systems, slotted holes mount, will have limitations. In order to have an accurate approximate positioning, distances to reference points will be defined for each machine tool that will take into account the dimensions of the portable machine, of the fastening element and of the wind turbine elements, for example the theoretical centre of the slewing ring. This translates into some distance measurements that will correspond to the fastening element of the mount. The measures will depend on the size of the fastening element, and vice versa.

On this mount (1) the rest of the fastening element is installed, which has a frame (3), of prismatic shape with triangular base, topped with a free rim (4) on which an adjustment can be made, by means of two rotations, which enables levelling the machine tool so that two slides (5, 6) carried by the frame will define a plane of movement, parallel to the work plane of the machine tool that must match perfectly the previously defined plane Y-Z, as shown in figure 5. If required, a relative displacement between the mount (1) and the frame (3) can be of assistance.

A first half of a vertical slide (5), which second half carries the first half of a horizontal slide (6) is fixed over the frame (3). The other half of the horizontal slide (6) will be connected to the machine tool by means of a rotation axis (7). This rotation axis (7) system ensures the position of the head of the machine tool to be in the most convenient position, generally vertical. The specific order of the slides (5, 6) is not too relevant; the horizontal slide (6) may be attached to the frame (3) or vice versa.

The definitive position of the first half of the vertical slide (5) on the free rim (4) will be blocked by means of jacks (8) in the edge of the rotation plane. This will ensure the horizontality (parallelism to the slewing ring) of the horizontal slide (6) movement or levelling. On the other hand, by means of pushing set screws (41) and fastening screws, both perpendicular to the free rim (4), the verticality of the vertical slide (5) can be ensured.

It is possible to include a rotation auxiliary system (not shown) between the mount (1) and the frame (3) if the frame (2) has a very different position than the expected one. This auxiliary rotation system would be inside the contact plane between both elements and would consist of a series of slotted holes to allow a fine adjustment of the position, and a set of fastening and set screws similar to the ones mentioned on the free rim (4).

The movements of the slides (5, 6) may be carried out to perform the corresponding machining operations. In the example, we seek to machine a pocket (9), in which the insert (10) can be placed with the spare teeth. The insert (10) in the figures corresponds to a non-limiting example, since the size will depend on the number of teeth that are intended to be repaired, and on whether the pocket milling should cover the entire thickness of the slewing ring (11). The movements of both slides (5, 6) may be made from endless screws (spindles), which perform the movement of two imbricated parts (male-female) by dovetail in either guides or by linear guides. In the figures, we can appreciate wheels and crank drives of the endless screws, but they also may be motorized.

Once the centring of the machine with respect to the theoretical centre of the slewing ring (11) (plane Y-Z) is achieved, the milling machine can be activated to execute the pocket (9).

This working procedure ensures that the machine, through the movement of the horizontal slide (6) and the vertical slide (5), will machine a pocket (9) which side faces are exact projections to the slewing ring (11) centre or axis, with the double object of standardizing all pockets (9) and also of fitting said side faces of the inserts (10) to the pocket (9) with the greatest possible precision.

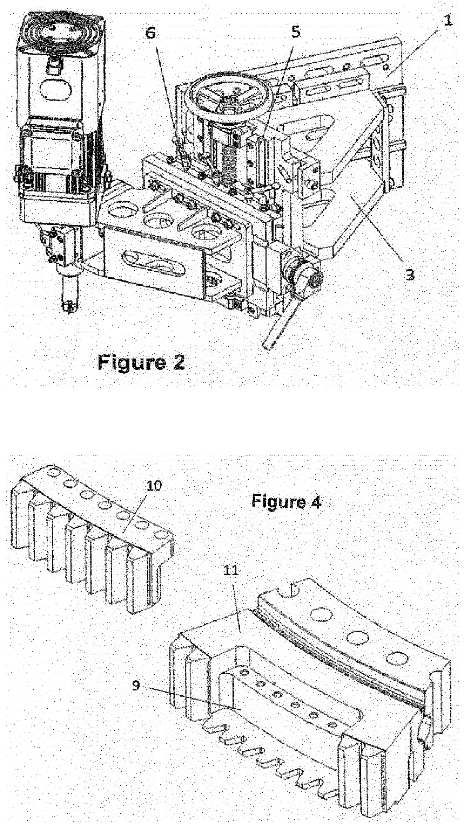

On the other hand, as the portable machine is fixed in the X axis and is the element to be machined, in this case the slewing ring (11), the one that moves through the drive of the gear motors (pinions), the pocket (9) and the insert (10) will be curved in their two larger vertical bases, corresponding to the geometric centre of the slewing ring (11) (figure 4).

To ensure the correct alignment, it is preferred to use a gadget that enables knowing the radial linear projection on the slewing ring (11) in order to centre the machine tool on this reference. This gadget will preferably be the insert (10) itself, which will be installed in the pocket (9). To this effect, the insert (10) has the shape of a straight prismatic sector of circular slewing ring, with a flat lowermost side, of equal outer radius than the slewing ring. By means of clamps or other means the teeth (flanks and valleys) of the insert (10) are aligned with the ones of the slewing ring (11) itself. The side faces of the insert (10) thus placed show the direction of the theoretical centre of the slewing ring (11). In order to check that the movement of the head of the machine tool is the one intended, the magnetic base of a dial indicator will be placed in the head of the milling machine and the needle of the indicator on the side of the insert (10), which will be previously positioned and fixed on the slewing ring (11). With the indicator thus positioned and by advancing the horizontal slide (6) on the plate, minimum variations should be obtained in the readings of the dial indicator that ensure the perfect alignment/projection of the machine on the theoretical radius of the slewing ring.

The flat lowermost face of the insert (10) will be used in order to locate the fastening element to the slewing ring (11), usually a series of holes for the passage of fastening screws whose thread in the slewing ring (11) can be made once the pocket (9) is finished and the insert (10) placed in position.

The dimensions of the wind turbine components depend on the generation capacity. Therefore it is possible to find slewing rings (11) and other elements with varying thicknesses or radii. In the case of a milling machine, this implies the need of being able to control the speed of the rotary plate, for example by means of a potentiometer of the head of the milling machine.

It is preferred for the control panel of the machine tool to have means for controlling the orientation movement of the nacelle, so as to be able to control the position of the element to be manipulated, especially when this one will be the slewing ring (11). In particular it must be able to activate any yaw motor in coordination with the actuation of the machine tool and to apply the brake, essential during the operations for reasons of safety and to avoid errors in the operations. This implies it will have a wiring and port (or wireless media) for its connection to the controller of the wind turbine.

## Claims

1. Installation procedure of a machine tool, inside a wind turbine nacelle, **characterized in that** it comprises the following stages:
[a]. Hoisting the machine tool components inside the nacelle;
[b]. Installing a mount (1) on a nacelle frame element (2) near the slewing ring (11) of the nacelle;
[c]. Installing the machine tool through a fastening element of the mount (1), the fastening element comprising a prismatic frame (3) of triangular base connected through a free rim (4) to a vertical slide (5) and a horizontal slide (6) bearing the machine tool;
[d]. Aligning the movement of the horizontal slide (6) with the upper plane of the slewing ring (11) by means of adjusting the slides (5,6) position on the free rim (4) on a rotation axis perpendicular to the free rim (4);
[e]. Correcting the position of the vertical slide (5) so its movement will be perpendicular to the plane of the slewing ring, by means of the rotation with respect to a horizontal axis parallel to the free rim (4) of the frame (3);
[f]. Arranging the head of the machine tool in the vertical position by means of a rotation axis system (7) arranged between the slides and the machine tool.

2. Procedure, according to claim 1, in which the machine tool is a milling machine.

3. Procedure, according to claim 1, in which at least stages [d] to [f] are carried out by means of a gadget showing the radial lineal projection on the slewing ring (11).

4. Machine tool for use inside wind turbine nacelles, for installation by means of the procedure of claim 1, **characterized in that** its fastening element comprises two slides (5,6), vertical and horizontal, which carry out the movement of the machine tool head on a vertical plane radial to the slewing ring (11) of the wind turbine, and furthermore it comprises a mount (1) configured to be secured to a nacelle frame element (2) connected to a prismatic frame (3) of triangular base through a free rim (4) that acts as a mount to the slides (5,6) with adjusting ability by means of rotation with respect to a first perpendicular axis to the free rim (4) and a second horizontal axis parallel to the free rim (4), and a rotation axis system (7), with a horizontal rotation axis arranged between the slides (5,6) and the machine tool.

5. Machine tool, according to claim 4, in which the machine tool is a milling machine.

6. Machine tool, according to claim 5, having a potentiometer of the milling machine head for controlling the rotary plate speed.

7. Machine tool, according to claim 4, with a control panel of the machine tool having means to control the orientation movement of the nacelle.

8. Machine tool, according to claim 4, which rotation adjustment of axis parallel to the free rim (4) is done by means of pushing set screws (41) and fastening screws.

9. Use of a gadget which has the shape of straight prismatic sector with a slewing ring base, with teeth and maximum curving equal to the teeth and the curving of the slewing ring (11) for aligning the machine tool inside the nacelle of a wind turbine, in the procedure of claim 1.

## Patentansprüche

1. Installationsvorgang eines Maschinenwerkzeugs innerhalb einer Windkraftanlagengondel, **dadurch gekennzeichnet, dass** dieser die folgenden Stufen umfasst:
[a]. Anheben der Maschinenteilkomponenten innerhalb der Gondel;
[b]. Installieren einer Halterung (1) an dem Gondelrahmenelement (2) in Nähe des Drehkranzes (11) der Gondel;
[c]. Installieren des Maschinenwerkzeugs durch ein Befestigungselement der Halterung (1), wobei das Befestigungselement einen prismatischen Rahmen (3) mit einer dreieckigen Grundfläche umfasst, die durch einen freien Rand (4) mit einem vertikalen Schieber (5) und einem horizontalen Schieber (6), der die Werkzeugmaschine trägt, verbunden ist;
[d]. Ausrichten der Bewegung des horizontalen Schiebers (6) mit der oberen Ebene des Drehkranzes (11) durch Einstellen der Position der Schieber (5, 6) an dem freien Rand (4) auf einer Drehachse senkrecht zum freien Rand (4);
[e]. Korrigieren der Position des vertikalen Schiebers (5), so dass dessen Bewegung senkrecht zur Ebene des Drehkranzes erfolgt, mittels Drehung in Bezug auf eine horizontale Achse parallel zum freien Rand (4) des Rahmens (3);
[f]. Anordnen des Kopfes der Werkzeugmaschine in vertikaler Position mittels eines Drehachsensystems (7), das zwischen den Schiebern und der Werkzeugmaschine angeordnet ist.

2. Vorgang nach Anspruch 1, wobei das Maschinenwerkzeug eine Fräsmaschine ist.

3. Vorgang nach Anspruch 1, wobei mindestens die Stufen [d] bis [f] mittels eines Geräts ausgeführt werden, das die radiale lineare Projektion auf den Drehkranz (11) zeigt.

4. Maschinenwerkzeug für die Verwendung innerhalb von Windkraftanlagengondeln zur Installation mittels des Vorgangs nach Anspruch 1, **dadurch gekennzeichnet, dass** dessen Befestigungselement zwei Schieber (5, 6), vertikal und horizontal, umfasst, welche die Bewegung des Werkzeugmaschinenkopfes in einer vertikalen Ebene radial zum Schwenkring (11) der Windkraftanlage ausführen, und darüber hinaus eine Halterung (1) umfasst, die konfiguriert ist, um an einem Gondelrahmenelement (2) gesichert zu werden, das mit einem prismatischen Rahmen (3) mit dreieckiger Grundfläche durch einen freien Rand (4) verbunden ist, der als Halterung an den Schiebern (5, 6) mit Einstellbarkeit mittels Drehung in Bezug auf eine erste senkrechte Achse zum freien Rand (4) und eine zweite horizontale Achse parallel zum freien Rand (4) dient und ein Drehachsensystem (7) mit einer horizontalen Drehachse zwischen den Schiebern (5, 6) und dem Maschinenwerkzeug angeordnet ist.

5. Maschinenwerkzeug nach Anspruch 4, wobei das Maschinenwerkzeug eine Fräsmaschine ist.

6. Maschinenwerkzeug nach Anspruch 5, aufweisend ein Potentiometer des Fräsmaschinenkopfes zum Steuern der Drehscheibendrehzahl.

7. Maschinenwerkzeug nach Anspruch 4, wobei eine Systemsteuerung des Maschinenwerkzeugs Mittel zum Steuern der Ausrichtungsbewegung der Gondel aufweist.

8. Maschinenwerkzeug nach Anspruch 4, wobei die Dreheinstellung der Achse parallel zum freien Rand (4) mittels Druckstellschrauben (41) und Befestigungsschrauben erfolgt.

9. Verwendung eines Geräts, das die Form eines geraden prismatischen Sektors mit einer Drehkranzgrundfläche aufweist, mit Zähnen und einer maximalen Krümmung gleich den Zähnen und der Krümmung des Drehkranzes (11) zum Ausrichten des Maschinenwerkzeugs innerhalb der Gondel einer Windkraftanlage, n dem Vorgang nach Anspruch 1.

## Revendications

1. Procédure d'installation d'une machine-outil, à l'intérieur d'une nacelle d'éolienne, **caractérisée en ce qu'**elle comprend les étapes suivantes :
[a]. Le hissage des composants de la machine-outil à l'intérieur de la nacelle ;
[b]. L'installation d'un support (1) sur un élément de cadre de nacelle (2) à proximité de la couronne d'orientation (11) de la nacelle ;
[c]. L'installation de la machine-outil à travers un élément de serrage du support (1), l'élément de serrage comprenant un cadre prismatique (3) à base triangulaire raccordé par un rebord libre (4) à une glissière verticale (5) et à une glissière horizontale (6) portant la machine-outil ;
[d]. L'alignement du déplacement de la glissière horizontale (6) avec le plan supérieur de la couronne d'orientation (11) au moyen d'un réglage de la position des glissières (5,6) sur le rebord libre (4) sur un axe de rotation perpendiculaire au rebord libre (4) ;
[e]. La correction de la position de la glissière verticale (5) pour que son déplacement soit perpendiculaire au plan de la couronne d'orientation, au moyen de la rotation par rapport à un axe horizontal parallèle au rebord libre (4) du cadre (3) ;
[f]. La disposition de la tête de la machine-outil en position verticale au moyen d'un système d'axe de rotation (7) disposé entre les glissières et la machine-outil.

2. Procédure, selon la revendication 1, dans laquelle la machine-outil est une fraiseuse.

3. Procédure, selon la revendication 1, dans laquelle au moins les étapes [d] à [f] sont effectuées au moyen d'un accessoire montrant la projection linéaire radiale sur la couronne d'orientation (11).

4. Machine-outil pour son utilisation à l'intérieur des nacelles d'éolienne, pour son installation au moyen de la procédure de la revendication 1, **caractérisée en ce que** son élément de serrage comprend deux glissières (5,6), verticale et horizontale, qui effectuent le déplacement de la tête de la machine-outil sur un plan vertical radial à la couronne d'orientation (11) de l'éolienne, et elle comprend en outre un support (1) configuré pour être fixé à un élément de cadre de nacelle (2) raccordé à un cadre prismatique (3) à base triangulaire à travers un rebord libre (4) qui sert de support aux glissières (5,6) avec possibilité de réglage au moyen d'une rotation par rapport à un premier axe perpendiculaire au rebord libre (4) et à un deuxième axe horizontal parallèle au rebord libre (4), et un système d'axe de rotation (7), avec un axe de rotation horizontal disposé entre les glissières (5,6) et la machine-outil.

5. Machine-outil, selon la revendication 4, dans laquelle la machine-outil est une fraiseuse.

6. Machine-outil, selon la revendication 5, ayant un potentiomètre de la tête de fraiseuse pour contrôler la vitesse de la plaque rotative.

7. Machine-outil, selon la revendication 4, avec un panneau de contrôle de la machine-outil ayant des moyens pour contrôler le mouvement d'orientation de la nacelle.

8. Machine-outil, selon la revendication 4, dont le réglage de rotation de l'axe parallèle au rebord libre (4) est réalisé au moyen d'une poussée de vis de calage (41) et de vis de serrage.

9. Utilisation d'un accessoire qui a la forme d'un secteur prismatique droit avec une base de couronne d'orientation, avec des dents et une courbure maximale identiques aux dents et à la courbure de la couronne d'orientation (11) pour aligner la machine-outil à l'intérieur de la nacelle d'une éolienne, dans la procédure de la revendication 1.
